(19) Europäisches Patentamt
European Patent Office
Office européen des brevets

(11) **EP 3 271 226 B1**

(12) **EUROPÄISCHE PATENTSCHRIFT**

(45) Veröffentlichungstag und Bekanntmachung des Hinweises auf die Patenterteilung:
**05.01.2022 Patentblatt 2022/01**

(21) Anmeldenummer: **16710966.9**

(22) Anmeldetag: **17.03.2016**

(51) Int Cl.:
*B60T 13/66* *(2006.01)*　　*B60T 7/12* *(2006.01)*
*B60L 7/26* *(2006.01)*　　*B60T 17/22* *(2006.01)*

(86) Internationale Anmeldenummer:
**PCT/EP2016/055891**

(87) Internationale Veröffentlichungsnummer:
**WO 2016/150830 (29.09.2016 Gazette 2016/39)**

(54) **BREMSEN EINES SCHIENENFAHRZEUGS**

BRAKING OF A RAIL VEHICLE

FREINS POUR UN VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.03.2015 DE 102015205099**

(43) Veröffentlichungstag der Anmeldung:
**24.01.2018 Patentblatt 2018/04**

(73) Patentinhaber: **Bombardier Transportation GmbH 10785 Berlin (DE)**

(72) Erfinder: **RAAB, Christoph**
**36391 Sannerz (DE)**

(74) Vertreter: **Patentanwälte Bressel und Partner mbB Potsdamer Platz 10 10785 Berlin (DE)**

(56) Entgegenhaltungen:
**EP-A2- 0 038 956　　WO-A1-03/086809**
**DE-A1- 2 063 864　　DE-A1- 2 708 361**
**DE-A1- 3 607 239　　JP-A- H05 668**
**JP-A- 2003 259 502**

**Beschreibung**

Die Erfindung betrifft ein Verfahren und eine Anordnung zum Bremsen eines Schienenfahrzeugs sowie ein Schienenfahrzeug mit der Anordnung. Die Erfindung ist für Schienenfahrzeuge mit einem Bremssystem geeignet, dem eine Bremswirkungsvorgabe (z.B. eine Bremskraftvorgabe oder eine Bremsdrehmomentvorgabe) als Eingangsgröße zugeführt wird und das dadurch steuerbar ist.

Die Erfindung betrifft insbesondere Bremssysteme mit einer Bremswirkung, die gemäß Bremswirkungsvorgabe entgegen der Fahrtrichtung gerichtet ist, d.h. ein Beibehalten der Bremswirkung über den Zeitpunkt des Fahrzeug-Stillstandes hinaus führt zu einem Wiederanfahren in die entgegengesetzte Richtung. Beispiele für solche Bremssysteme sind elektrodynamische Bremssysteme, die zumindest einen elektrischen Antriebsmotor des Fahrzeugs als elektrischen Generator betreiben. Mechanische Bremssysteme und Wirbelstrombremsen wirken dagegen unabhängig von der Fahrtrichtung in gleicher Weise.

Die Erfindung betrifft ferner die Problematik des Abbremsens des Fahrzeugs bis zum Stillstand. Werden die üblichen mechanischen Bremssysteme zum Abbremsen bis zum Stillstand verwendet, entsteht ein für Personen in dem Fahrzeug unkomfortabler Ruck. Diese mechanischen Bremssysteme von Schienenfahrzeugen sind nicht in zufriedenstellender Weise durch eine Bremswirkungsvorgabe steuerbar. Auch nutzen sich mechanische Bremssysteme durch Reibung bei Nutzung während des Fahrens ab.

WO 03/086809 A1 schlägt ein elektrodynamisches Bremsen eines Schienenfahrzeugs bis zum Stillstand vor, wobei die Beschleunigung des Schienenfahrzeugs in Abhängigkeit von seiner Geschwindigkeit geregelt wird.

DE 36 07 239 A1 beschreibt ein Bremssteuersystem für Eisenbahnwagen, bei dem durch manuelle Steuermittel ein Brems-Anforderungssignal erzeugt wird. Das Bremssystem ist dazu in der Lage, einen pneumatischen Bremsdruck zu erzeugen und eine elektrodynamische Bremswirkung zu erzeugen. In einem Regelsystem wird ein zulässiges Verzögerungssignal mit einem Bremsanforderungssignal verglichen und das Bremsanforderungssignal wird auf das zulässige Verzögerungssignal begrenzt. Wenn der pneumatische Bremsdruck eine tatsächliche Verzögerungsrate des Eisenbahnwagens oder des Zuges überschreitet, wird ein Verzögerungsraten-Fehlersignal erzeugt und ein Antriebsmotor, der mit der Steuerung der pneumatischen Bremse zusammengeschaltet ist, angesteuert, um den pneumatischen Bremsdruck zu vermindern. Das Bremssystem weist einen Funktionsgenerator auf, der entsprechend der Adhäsion zwischen Rad und Schiene bei verschiedenen Geschwindigkeiten ein Signal liefert, welches der maximalen Verzögerungsrate entspricht, mit der der Wagen normalerweise von einer gegebenen Geschwindigkeit aus verzögert werden kann, ohne dass die Räder gleiten. Mit absinkender Geschwindigkeit erhöht sich der maximale Adhäsionswert zwischen Rad und Schiene. In der Nähe der Geschwindigkeit null liefert das Profil eine Abrollcharakteristik, um einen ruckweisen Lauf zu verhindern, wenn der Wagen zum Stillstand kommt. Wenn die Geschwindigkeit des Wagens bzw. des Zuges sich dem Wert null nähert, dann wird der Auslaufteil der Charakteristik im Geschwindigkeits-Adhäsions-Profil wirksam und ein entsprechendes maximal zulässiges Verzögerungssignal fällt progressiv auf null ab, wenn der Zug bzw. Wagen weiter verlangsamt wird. Dadurch sinkt die Bremswirkung ab, um Rattern zu vermindern, das sonst auftreten würde, wenn der Zug bzw. Wagen zum Stillstand kommt.

EP 0 038 956 A2 beschreibt ein Verfahren zum Abbremsen spurgebundener Fahrzeuge, bei den die Fahrzeuggeschwindigkeit nach einer vorgegebenen Funktion geregelt wird, indem die Differenz zwischen tatsächlicher Fahrzeuggeschwindigkeit und einer aus der vorgegebenen Funktion ermittelten Sollgeschwindigkeit einer die Bremskraft des Fahrzeugs regelnden Einrichtung zugeführt wird, wobei die vorgegebene Funktion eine wegabhängige Phase konstanter Verzögerung und eine Phase abnehmender Verzögerung aufweist.

Es ist eine Aufgabe der vorliegenden Erfindung, ein Schienenfahrzeug für in dem Fahrzeug befindliche Personen komfortabel in kurzer Zeit bis zum Stillstand abzubremsen.

Gemäß einem Grundgedanken der vorliegenden Erfindung wird der Bremsvorgang in einer Mehrzahl von Bremsphasen ausgeführt, während denen die Bremswirkungsvorgabe in unterschiedlicher Weise erzeugt und ausgegeben wird. Von Vorteil ist es dabei, wenn in einer ersten Bremsphase die Bremswirkungsvorgabe abhängig von einer Bremsanforderung erzeugt und ausgegeben wird. Die Bremsanforderung kann insbesondere die Anforderung eines Fahrers des Fahrzeugs sein, der z.B. eine Verzögerung (negative Beschleunigung) des Fahrzeugs oder eine Bremskraft (z.B. eine negative Zugkraft erzeugt durch zumindest einen Antriebsmotor des Fahrzeugs) anfordert. Insbesondere kann die Bremsanforderung unverändert als Bremswirkungsvorgabe ausgegeben werden, wobei unter "unverändert" auch zu verstehen ist, dass die Bremsanforderung in eine entsprechende Größe umgerechnet wird. Diese Umrechnung erfolgt z.B., wenn der Fahrer eine Bremskraft oder Verzögerung anfordert, die Bremswirkungsvorgabe jedoch eine Bremsdrehmomentvorgabe ist.

In vielen Fällen existiert für den Betrieb des Fahrzeugs jedoch ein Verzögerungsmaximalwert, d.h. die Verzögerung des Fahrzeugs darf den Maximalwert nicht überschreiten, wobei in der Praxis ein geringfügiges Überschreiten aufgrund der Dynamik der Bewegung des Fahrzeugs und aufgrund der Eigenschaften der Steuerung vorkommen kann. Es wird daher vorgeschlagen, in der ersten Bremsphase die Bremswirkungsvorgabe abhängig von einer Bremsanforderung zu erzeugen und auszugeben, wobei die Verzögerung des Schienenfahrzeugs auf den vorgegebenen Verzögerungsmaximalwert begrenzt wird/ist. Insbesondere wird daher die Bremsanforderung unverändert in die Bremswirkungsvorgabe umgesetzt, wenn dadurch nicht die vorgegebene maximale Verzögerung überschritten wird oder lediglich aus den o.g. Gründen geringfügig und/oder kurzzeitig überschritten wird. Z.B. kann während der ersten Bremsphase ein erster Regler zur Erzeugung der Bremswirkungsvorgabe verwendet werden / vorhanden sein, wobei dem Regler die Bremsanforderung (z.B. des Fahrers oder eines automatischen Fahrzeugsteuerungssystems) als Eingangsgröße zugeführt wird und wobei der Regler die Bremswirkungsvorgabe begrenzt entsprechend dem vorgegebenen Verzögerungsmaximalwert als Ausgangsgröße erzeugt. Z.B. kann der Regler entweder inaktiv sein oder die Bremsanforderung ohne Begrenzung regeln, wenn die Bremsanforderung nicht zu einer Verzögerung führt, die größer als der vorgegebene Verzögerungsmaximalwert ist. Andererseits kann der Regler z.B. dann aktiv sein, wenn die Bremsanforderung zu einer größeren Verzögerung als der vorgegebene Verzögerungsmaximalwert führen würde. In diesem Fall kann der aktive Regler die Bremsanforderung entsprechend dem vorgegebenen Verzögerungsmaximalwert begrenzen, sodass dieser nicht überschritten wird, und entsprechend seinem Regelungsverhalten die Bremswirkungsvorgabe ausgeben. Beispielsweise handelt es sich bei dem ersten Regler um einen Regler mit Integralregelung, wobei auch andere Anteile wie eine Proportionalregelung und/oder eine Differenzialregelung alternativ oder zusätzlich vorhanden sein können.

In einer späteren Bremsphase, die nach der ersten Bremsphase ausgeführt wird, wird vorgeschlagen, die Bremswirkungsvorgabe durch einen Stillstands-Regler als Regler-Ausgangsgröße zu erzeugen, wobei dem Stillstands-Regler als Regler-Eingangsgröße eine kinematische Größe der Bewegung des Schienenfahrzeugs zugeführt wird und die Bewegung des Fahrzeugs bis zum Stillstand von dem Stillstands-Regler geregelt wird. Gemäß den beigefügten Ansprüchen handelt es sich bei der kinematischen Größe um die Fahrgeschwindigkeit des Schienenfahrzeugs, die durch den Stillstands-Regler auf den Sollwert null geregelt wird.

Insbesondere kann es sich bei dem Stillstands-Regler um einen Regler mit Integralregelung handeln, wobei die Integralregelung bei der Erzeugung der Regler-Ausgangsgröße ein Integral der kinematischen Größe über die seit dem Beginn des Regelungsvorganges verstrichene Zeit berücksichtigt. Alternativ oder zusätzlich kann der Stillstands-Regler zumindest einen anderen Regelungsanteil haben, insbesondere eine Proportionalregelung und optional auch eine Differenzialregelung. Der Beginn des Regelungsvorganges des Stillstands-Reglers kann insbesondere, wie später noch genauer ausgeführt wird, der Beginn einer zweiten oder einer dritten Bremsphase sein. In jedem Fall führt die Regelung während der späteren Bremsphase aufgrund der Eigenschaften des Stillstands-Reglers dazu, dass das Fahrzeug zum Stillstand gebracht wird.

Die Unterteilung des Bremsvorganges in eine Mehrzahl von Bremsphasen hat den Vorteil, dass in der ersten Bremsphase insbesondere mit maximal zulässiger Verzögerung gebremst werden kann und in der letzten, zum Stillstand führenden Bremsphase für Personen in dem Fahrzeug komfortabel und insbesondere ruckarm bis zum Stillstand gebremst werden kann. Dieses Abbremsen bis zum Stillstand gelingt daher in kürzerer Zeit als wenn der Stillstands-Regler bereits zu Beginn der Abbremsung aktiv ist.

Außer dem Verfahren zum Bremsen eines Schienenfahrzeugs, das das steuerbare Bremssystem aufweist, gehört zum Umfang der Erfindung auch eine Anordnung zum Bremsen eines Schienenfahrzeugs, wobei die Anordnung einen Ausgang zur Ausgabe der Bremswirkungsvorgabe als Eingangsgröße für das steuerbare Bremssystem des Schienenfahrzeugs aufweist. Die Anordnung weist eine Erzeugungseinrichtung zur Erzeugung der Bremswirkungsvorgabe auf. Insbesondere ist die Erzeugungseinrichtung zur Ausführung des Verfahrens zum Bremsen des Schienenfahrzeugs gemäß einer der Ausgestaltungen ausgebildet, die in dieser Beschreibung beschrieben sind. Ferner gehört zum Umfang der Erfindung ein Schienenfahrzeug mit der Anordnung, wobei das Schienenfahrzeug das mit der Bremswirkungsvorgabe als Eingangsgröße steuerbare Bremssystem aufweist.

Die Bremswirkungsvorgabe ist eine im Laufe der Zeit veränderliche Größe, da sie in der Regel während des Bremsvorgangs bis zum Stillstand des Fahrzeugs nicht konstant bleibt. Daher wird die Bremswirkungsvorgabe insbesondere wiederholt oder kontinuierlich erzeugt und an das Bremssystem ausgegeben. Die wiederholte Erzeugung und Ausgabe der Bremswirkungsvorgabe kann auch als zyklisch bezeichnet werden. In jedem Zyklus kann insbesondere zumindest eine Eingangsgröße der Erzeugungseinrichtung bzw. eine Eingangsgröße des zyklischen Verfahrens mit ihrem aktuell zur Verfügung stehenden Wert berücksichtigt werden. In der ersten Bremsphase ist insbesondere die Bremsanforderung die Eingangsgröße, z.B. eine Bremskraftanforderung oder eine Bremsdrehmomentanforderung. Das Drehmoment ist z.B. das Drehmoment zumindest eines Antriebsmotors des Fahrzeugs, der während eines elektrodynamischen Bremsvorganges als Generator betrieben wird. Z.B. kann eine Steuerung des zumindest einen Antriebsmotors ausgestaltet sein, als Eingangsgröße eine Bremskraftvorgabe oder eine Bremsdrehmomentvorgabe zu empfangen. Die Steuerung oder Regelung setzt diese Bremswirkungsvorgabe insbesondere möglichst ohne Zeitverzögerung um, indem sie den zumindest einen Antriebsmotor entsprechend steuert oder regelt.

In der späteren Bremsphase, in der der Stillstands-Regler die Fahrgeschwindigkeit auf den Sollwert null regelt, ist insbesondere die Fahrgeschwindigkeit eine Eingangsgröße, nämlich eine Regler-Eingangsgröße des Stillstands-Reglers. Die Information über die Fahrgeschwindigkeit kann insbesondere aus üblicherweise vorhandenen Messsystemen des Fahrzeugs gewonnen werden. Z.B. kann zumindest ein Rad des Schienenfahrzeugs mit einem Drehzahlmesser kombiniert sein. Der Begriff Fahrgeschwindigkeit schließt auch der ersten zeitlichen Ableitung des Fahrweges äquivalente Größen, z.B. die gemessene Drehzahl, mit ein. Die Fahrgeschwindigkeit kann daher auch die Dimension einer Drehzahl, d.h. der Anzahl von Radumdrehungen pro Zeit, haben. Insbesondere wird die Fahrgeschwindigkeit unmittelbar dem Stillstands-Regler als Eingangsgröße zugeführt regelt der Regler die Fahrgeschwindigkeit auf den Sollwert null. Weiterhin ist es möglich, dass der Stillstands-Regler nicht unmittelbar die Fahrgeschwindigkeit als Eingangsgröße empfängt, sondern eine andere kinematische Größe, aus der der Stillstands-Regler die Fahrgeschwindigkeit ermittelt. Eine solche andere kinematische Größe ist z.B. der vom Fahrzeug zurückgelegte Fahrweg als Funktion der Zeit oder die Beschleunigung des Fahrzeugs als Funktion der Zeit.

Es ist jedoch nicht ausgeschlossen und wird sogar bevorzugt, dass auch in der späteren Bremsphase die Bremsanforderung berücksichtigt wird, und zwar insbesondere in jedem Zyklus. Bricht z.B. der Fahrer den Bremsvorgang ab, indem er statt Bremskraft eine Zugkraft anfordert, ist dies vorzugsweise auch für den Betrieb des Stillstands-Reglers zu berücksichtigen. Z.B. kann der Stillstands-Regler den Abbruch des Bremsvorganges selbst feststellen und seinen Betrieb beenden. Alternativ kann der Stillstands-Regler von einer übergeordneten Steuerung inaktiv geschaltet werden. Entsprechendes gilt für eine optionale zweite Bremsphase, die zwischen der ersten Bremsphase und der späteren Bremsphase ausgeführt wird. Auch diese zweite Bremsphase kann abhängig von der aktuellen Bremsanforderung abgebrochen werden.

Die Berücksichtigung von Veränderungen der zumindest einen Eingangsgröße der Erzeugungseinrichtung bzw. des Verfahrens ermöglicht wie bereits erwähnt die Erzeugung der Bremswirkungsvorgabe als im Laufe der Zeit veränderliche Größe und die Ausgabe der Bremswirkungsvorgabe kontinuierlich oder wiederholt als im Laufe der Zeit veränderliche Größe.

Vorzugsweise wird in einer auf die erste Bremsphase folgenden zweiten Bremsphase der Betrag der Bremswirkungsvorgabe automatisch stetig reduziert und ausgegeben. Dabei entspricht die Reduktion des Betrages der Bremswirkungsvorgabe pro Zeitintervall einem vorgegebenen Ruckmaximalwert. Die spätere Bremsphase, in der der Stillstands-Regler die Fahrgeschwindigkeit auf den Sollwert null regelt, kann in diesem Fall als dritte Bremsphase bezeichnet werden, die der zweiten Bremsphase folgt. Diese Reduktion des Betrages der Bremswirkungsvorgabe entsprechend dem vorgegebenen Ruckmaximalwert führt entsprechend der Definition des Rucks als erste zeitliche Ableitung der Fahrzeugbeschleunigung zu einer konstanten Abnahme des Betrages der Fahrzeugbeschleunigung in der zweiten Bremsphase. Ein entsprechendes Beschleunigungs-Zeit-Diagramm zeigt daher eine Gerade, deren Steigung gleich dem Ruckmaximalwert ist. Da während des Bremsvorganges der Betrag der negativen Beschleunigung des Fahrzeugs reduziert wird, nimmt die Beschleunigung zu und die Zunahme wird durch den positiven Ruckmaximalwert bestimmt. Der Ruckmaximalwert kann z.B. ein vom Hersteller des Fahrzeugs fest vorgegebener Maximalwert sein, der unveränderlich ist. Alternativ kann der Ruckmaximalwert z.B. abhängig davon, ob die Fahrt des Fahrzeugs für die darin befindlichen Personen komfortabler oder weniger komfortabel sein soll, als unterschiedlich großer Wert vorgegeben sein. Es ist auch möglich, dass der Ruckmaximalwert während der Fahrt geändert wird. Dabei ist es auch nicht ausgeschlossen, dass der vorgegebene Ruckmaximalwert während der zweiten Bremsphase geändert wird. Bevorzugt wird jedoch ein während der zweiten Bremsphase konstanter vorgegebener Ruckmaximalwert.

Bei einer Variante der Ausführung der zweiten Bremsphase gibt es eine andere Vorschrift, gemäß der der Betrag der Bremswirkungsvorgabe reduziert wird. Z.B. kann vorgegeben sein, dass die Beschleunigung des Fahrzeugs während der zweiten Bremsphase gemäß einer parabolischen Funktion der Zeit zunimmt. Die Reduktion des Betrages der Bremswirkungsvorgabe pro Zeitintervall entsprechend dem vorgegeben Ruckmaximalwert hat jedoch den Vorteil, dass die Beschleunigung während der zweiten Bremsphase in der maximal zulässigen Weise erhöht wird (d.h. ihr Betrag verringert wird). Auf die erste Bremsphase mit z.B. konstanter Bremskraft und (negativer) Beschleunigung folgt daher unter Beachtung des maximal zulässigen Rucks und dadurch Gewährleistung des Fahrkomforts eine Abnahme der Bremskraft, d.h. Zunahme der Beschleunigung. Diese Vorgehensweise führt daher zu einer besonders kurzen Dauer des gesamten Bremsvorganges bei gleichzeitiger Beachtung des Fahrkomforts.

Insbesondere wird es bevorzugt, den Zeitpunkt des Beginns der zweiten Bremsphase vorauszubestimmen. Durch das Ergebnis der Vorausbestimmung wird festgelegt, zu welchem Zeitpunkt die erste Bremsphase beendet ist und die zweite Bremsphase beginnt. Vorzugsweise wird dieser Übergangszeitpunkt indirekt vorausbestimmt, indem eine Fahrgeschwindigkeit des Fahrzeugs berechnet wird, bei deren Erreichen die erste Bremsphase beendet wird und die zweite Bremsphase beginnt. Dies kann auf einfache Weise in der Praxis realisiert werden, wenn wie üblich das Fahrzeug mit einem Fahrgeschwindigkeitsmesssystem ausgestattet ist. Liefert dieses Messsystem den vorausberechneten Wert der Geschwindigkeit als Messwert oder ist der vorausberechnete Wert der Geschwindigkeit für das Umschalten in die zweite Bremsphase bei einer wiederholten Prüfung bereits unterschritten, wird die erste Bremsphase beendet und die zweite Bremsphase begonnen. Insbesondere wird diese Übergangsgeschwindigkeit berechnet, sobald die erste Bremsphase begonnen wird. Da die erste Bremsphase im Allgemeinen unterschiedlich verlaufen kann, je nach dem zeitlichen Verlauf der Bremsanforderung, wird es bevorzugt, dass die Übergangsgeschwindigkeit während der ersten Bremsphase wiederholt berechnet wird und jeweils der zuletzt berechnete Wert für den Übergang in die zweite Bremsphase gültig ist. Dies schließt nicht aus, dass der letzte ermittelte Wert unter Berücksichtigung des zeitlichen Verlaufs der bisher ermittelten Werte der Umschaltgeschwindigkeit während desselben Bremsvorganges ermittelt wird, z.B. durch Anwendung eines Filters, der den zeitlichen Verlauf der ermittelten Werte der Umschaltgeschwindigkeit glättet.

Insbesondere wird der vorausberechnete Geschwindigkeitswert abhängig von einer der folgend genannten Größen oder abhängig von einer Kombination zweier oder dreier der folgend genannten Größen vorausberechnet: die erzeugte Bremswirkungsvorgabe während der ersten Betriebsphase, der vorgegebene Verzögerungsmaximalwert und der vorgegebene Ruckmaximalwert. Wenn sich der Wert einer dieser Größen während der ersten Bremsphase ändern sollte, wird es bevorzugt, dass der vorausberechnete Geschwindigkeitswert abhängig von dem zuletzt während der ersten Bremsphase gültigen Wert der jeweiligen Größe berechnet wird. Soweit die jeweilige Größe bei der Vorausberechnung des Übergangsgeschwindigkeitswertes berücksichtigt wird, gilt vorzugsweise Folgendes: Je größer die erzeugte Bremswirkungsvorgabe während der ersten Bremsphase ist, desto größer ist der vorausberechnete Übergangsgeschwindigkeitswert und umgekehrt. Je größer der vorgegebene Verzögerungsmaximalwert ist, desto größer ist der vorausberechnete Übergangsgeschwindigkeitswert. Je kleiner der vorgegebene Ruckmaximalwert ist, desto größer ist der vorausberechnete Übergangsgeschwindigkeitswert. Insbesondere kann der vorausberechnete Übergangsgeschwindigkeitswert umgekehrt proportional zu dem vorgegebenen Ruckmaximalwert sein.

Statt des vorgegebenen Verzögerungsmaximalwertes kann der tatsächliche (insbesondere gemessene) Verzögerungswert der Verzögerung des Fahrzeugs für die Vorausberechnung des Übergangsgeschwindigkeitswertes verwendet werden. Dies gilt insbesondere für den Fall, dass die Verzögerung des Fahrzeugs am Ende der ersten Bremsphase nicht den vorgegebenen Verzögerungsmaximalwert erreicht, sondern darunter liegt, d.h. die negative Beschleunigung liegt oberhalb ihres vorgegebenen Minimalwertes.

Insbesondere ist der vorausberechnete Übergangsgeschwindigkeitswert abhängig von dem aktuell gültigen Wert der Verzögerung. Auf diese Weise wird berücksichtigt, auf welchem Niveau sich die Verzögerung und damit insbesondere die Bremskraft oder das Bremsdrehmoment befindet, wenn die erste Bremsphase endet. Ein höherer Wert der Verzögerung führt dabei zu einem höheren vorausberechneten Übergangsgeschwindigkeitswert und umgekehrt. Anders ausgedrückt ist es bei einem höheren Niveau der Verzögerung von Vorteil, die erste Bremsphase bei einem höheren Wert der Fahrgeschwindigkeit des Fahrzeugs zu beenden und damit früher zu beenden als bei einem niedrigeren Niveau der Verzögerung. Bei einem höheren Niveau wird wegen der Begrenzung des Rucks auf den vorgegebenen Ruckmaximalwert mehr Zeit nach dem Ende der ersten Bremsphase benötigt, um die Beschleunigung auf null zu reduzieren.

Die oben erwähnte Reduktion des Betrages der Bremswirkungsvorgabe während der zweiten Bremsphase kann insbesondere durch eine entsprechende Begrenzungseinrichtung bewirkt werden. Z.B. erhält die Begrenzungseinrichtung als Eingangsgröße eine von einer anderen Einrichtung erzeugte Bremswirkungsvorgabe. Die Begrenzungseinrichtung prüft, ob die Ausgabe dieser Bremswirkungsvorgabe dem Kriterium genügt, dass der sich daraus ergebende Ruck den vorgegebenen Ruckmaximalwert nicht überschreitet. Wenn dies der Fall ist, begrenzt die Begrenzungseinrichtung die Bremswirkungsvorgabe auf den Wert, der einer Änderung der Fahrzeugbeschleunigung mit dem vorgegebenen Ruckmaximalwert entspricht. Andernfalls gibt die Begrenzungseinrichtung die als Eingangsgröße erhaltene Bremswirkungsvorgabe unverändert aus. Die Ausgangsgröße der Begrenzungseinrichtung kann als Ausgangsgröße der gesamten Erzeugungseinrichtung bzw. als Ergebnis des Verfahrens genutzt werden, d.h. die Ausgangsgröße ist die Eingangsgröße für das steuerbare Bremssystem.

Eine solche Begrenzungseinrichtung ermöglicht es, den Stillstands-Regler während der zweiten Bremsphase und insbesondere mit Beginn der zweiten Bremsphase zu aktivieren, d.h. den Betrieb des Stillstands-Reglers zu beginnen. Wenn der Stillstands-Regler als Ausgangsgröße eine Bremswirkungsvorgabe erzeugt, die dem genannten Kriterium nicht genügt, begrenzt die Begrenzungseinrichtung den Wert entsprechend. Insbesondere ist daher der Ausgang des Stillstands-Reglers mit dem Eingang der Begrenzungseinrichtung verbunden.

Unabhängig von der konkreten Ausgestaltung der Erzeugungseinrichtung kann der Stillstands-Regler insbesondere mit einem Übergang von der ersten Bremsphase in die zweite Bremsphase aktiviert werden und er erzeugt bereits in der zweiten Bremsphase eine Bremswirkung als Regler-Ausgangsgröße, wobei jedoch in der zweiten Bremsphase eine Bremswirkungsvorgabe an das steuerbare Bremssystem ausgegeben wird, die der Reduktion des Betrages der Bremswirkungsvorgabe pro Zeitintervall entsprechend dem vorgegebenen Ruckmaximalwert entspricht. Dies hat wie auch bei der zuvor beschriebenen Ausgestaltung der Erzeugungseinrichtung den Vorteil, dass der Übergang von der zweiten Bremsphase in die dritte Bremsphase automatisch stattfindet, wenn der Stillstands-Regler Werte der Bremswirkungsvorgabe erzeugt, die nicht zu einem über dem vorgegebenen Ruckmaximalwert liegenden Ruck führen. Insbesondere ist es daher nicht erforderlich, einen Zeitpunkt für einen Übergang von der zweiten in die dritte Bremsphase vorauszubestimmen.

Es wird bevorzugt, dass der Stillstands-Regler eine Integralregelung aufweist, die bei der Erzeugung der Regler-Ausgangsgröße ein Integral der Fahrgeschwindigkeit über die seit dem Beginn der zweiten Bremsphase verstrichene Zeit berücksichtigt. Eine Integralregelung ist zwar verhältnismäßig langsam, führt aber genau zu einer Reduzierung der Fahrgeschwindigkeit auf null. Das Vorhandensein einer Integralregelung schließt nicht aus, dass der Stillstands-Regler zumindest einen weiteren Anteil besitzt, der die Erzeugung der Regler-Ausgangsgröße beeinflusst, insbesondere eine Proportionalregelung und/oder eine Differenzialregelung. Bevorzugt wird eine Kombination einer Integralregelung mit einer Proportionalregelung, d.h. der Stillstands-Regler ist ein PI-Regler.

Der Bremsvorgang des Fahrzeugs kann stattfinden, während das Fahrzeug in ebenem Gelände fährt. Häufig kommt es jedoch vor, dass das Fahrzeug während des Bremsvorganges in ansteigendem Gelände (bergauf) oder in abfallendem Gelände (bergab) fährt. Bei einer Fahrt bergauf wirkt die Hangabtriebskraft als zusätzliche Bremskraft. Die von dem Bremssystem aufzubringende Bremskraft ist daher geringer als in ebenem Gelände. Für die Fahrt bergab gilt entsprechendes umgekehrt. Um den Einfluss der Hangabtriebskraft auf den Bremsvorgang zu berücksichtigen, wird bevorzugt, dass der Integralregelung ein negativer Startwert der Bremswirkung zugewiesen wird, der mit fortschreitender Zeit zunehmend von einem Ergebniswert des Integrals kompensiert wird. Je nach Wirkung der Hangabtriebskraft kann der negative Startwert mit fortschreitender Zeit nicht, vollständig oder mehr als vollständig kompensiert werden. Ein negativer Wert der Bremswirkung bedeutet, dass keine Bremswirkung, sondern eine positive Beschleunigungswirkung auftreten würde, wenn das Fahrzeug dieser Wirkung ausgesetzt werden würde. Bei dem negativen Startwert der Bremswirkung handelt es sich jedoch um einen Wert, der wegen der Ruckbegrenzung während der zweiten Bremsphase nicht als Bremswirkungsvorgabe an das Bremssystem ausgegeben wird. Während der zweiten Bremsphase wird vielmehr das Ergebnis des Integrals der Fahrgeschwindigkeit mit fortschreitender Zeit vergrößert. Bei einem Bremsvorgang während der Fahrt des Fahrzeugs bergauf kann aber das Ergebnis der Integralregelung auch dann ein negativer Wert der Bremswirkung sein, wenn die zweite Bremsphase in die dritte Bremsphase übergeht. Vorzugsweise ist jedoch zusätzlich eine Proportionalregelung vorhanden, die in jedem Fall eine positive Bremswirkung erzeugt, solange die Fahrgeschwindigkeit noch nicht den Wert null erreicht hat. Der PI-Regler hat insbesondere aufgrund des negativen Startwerts der Bremswirkung für die Integralregelung den Vorteil, dass die Bremswirkungsvorgabe lediglich geringfügig schwingt und nach dem Erreichen des Fahrzeug-Stillstandes nicht zu einem Anfahren des Fahrzeugs in entgegengesetzte Richtung führt. Anders ausgedrückt führen aufgrund der Ausgestaltung des Stillstands-Reglers geringe Änderungen der ausgegebenen Bremswirkungsvorgabe pro Zeitintervall zu einem Abbremsen des Fahrzeugs bei sehr geringem Ruck. Da aber die erste und die zweite Bremsphase ausgeführt wurden und am Ende der zweiten Bremsphase bereits eine sehr niedrige Fahrgeschwindigkeit erreicht ist, benötigt die dritte Bremsphase im Vergleich zu dem in WO 03/086809 A1 beschriebenen Bremsvorgang weniger Zeit.

Der negative Startwert der Bremswirkung wird vorzugsweise umso kleiner gewählt (d.h. sein Betrag ist umso größer), je größer die Bremswirkungsvorgabe zum Beginn der zweiten Bremsphase ist und umgekehrt. Insbesondere kann der negative Startwert der Bremswirkung durch eine Vorzeichenumkehr der Bremswirkungsvorgabe gebildet werden, die zum Beginn der zweiten Bremsphase an das Bremssystem ausgegeben wird bzw. zum Beginn der zweiten Bremsphase gültig ist. Dieser Wert der Bremswirkungsvorgabe zum Beginn der zweiten Bremsphase ist identisch mit dem Wert der Bremswirkungsvorgabe am Ende der ersten Bremsphase. Da die Bremswirkungsvorgabe bei einem Bremsvorgang während einer Bergauffahrt zum Beginn der zweiten Bremsphase kleiner ist als während eines Bremsvorganges bei Bergabfahrt, wird der gewünschte, oben beschriebene Effekt auf die Integralregelung erzielt.

Wie oben erwähnt, ist die Erzeugungseinrichtung der Anordnung zum Bremsen eines Schienenfahrzeugs insbesondere so ausgestaltet, dass die Erzeugungseinrichtung das Verfahren zur Erzeugung der Bremswirkungsvorgabe ausführt. Die möglichen Ausgestaltungen der Anordnung und der Erzeugungseinrichtung ergeben sich daher aus der Beschreibung der entsprechenden Ausgestaltung des Verfahrens und werden hier nicht nochmals wiederholt.

Die Ausführung der zweiten Bremsphase hat bei aktiviertem Stillstands-Regler mit Integralregelung noch einen weiteren Vorteil. In der ersten Bremsphase findet gegebenenfalls eine Begrenzung der Bremsanforderung entsprechend dem vorgegebenen Verzögerungsmaximalwert statt. Zwar wird abhängig von der Fahrzeugmasse (z.B. voll beladenes Fahrzeug oder Fahrzeug mit Leergewicht) eine unterschiedliche Bremskraft benötigt, um dieselbe Verzögerung des Fahrzeugs zu erzielen. Während der ersten Bremsphase ist dies jedoch wegen der Begrenzung der Verzögerung auf einfache Weise zu realisieren. Z.B. wird einer entsprechenden Verzögerungs-Begrenzungseinrichtung ein Messwert der aktuellen Fahrzeugbeschleunigung zugeführt, oder der Wert wird von ihr errechnet, und die Begrenzungseinrichtung kann bei Überschreiten des Verzögerungsmaximalwertes die Bremswirkungsvorgabe reduzieren. In der dritten Bremsphase, in der der Stillstands-Regler die Fahrgeschwindigkeit auf den Sollwert null regelt, hängt das Verhalten des Reglers zwar von der Fahrzeugmasse ab. Durch die Integralregelung hat der Regler aber Zeit, sein Verhalten an die Fahrzeugmasse anzupassen. Während der vorangegangenen zweiten Bremsphase mit Abnahme der Bremswirkung entsprechend dem vorgegebenen Ruckmaximalwert stellt sich aber die Bremswirkungsvorgabe entsprechend der tatsächlich vorhandenen Fahrzeugmasse ein. Bei höherer Fahrzeugmasse am Ende der zweiten Bremsphase ist auch die Bremswirkungsvorgabe höher und umgekehrt. Das Ergebnis der Integralregelung entspricht daher zu Beginn der dritten Bremsphase bereits einer an die Fahrzeugmasse angepassten Bremswirkungsvorgabe. Ausführungsbeispiele der Erfindung werden nun unter Bezugnahme auf die beigefügte Zeichnung beschrieben. Die einzelnen Figuren der Zeichnung zeigen:

Fig. 1 schematisch ein Blockdiagramm von Einrichtungen eines Schienenfahrzeugs, die an einem Bremsvorgang und dessen Steuerung/Regelung beteiligt sind,

Fig. 2 ein Ausführungsbeispiel einer Erzeugungseinrichtung zur Erzeugung einer Bremswirkungsvorgabe als Eingangsgröße für ein steuerbares Bremssystem und

Fig. 3 insbesondere für das in Fig. 2 dargestellte Ausführungsbeispiel, die Fahrzeuggeschwindigkeit und die Beschleunigung während der verschiedenen Bremsphasen eines Bremsvorgangs bis zum Stillstand des Fahrzeugs.

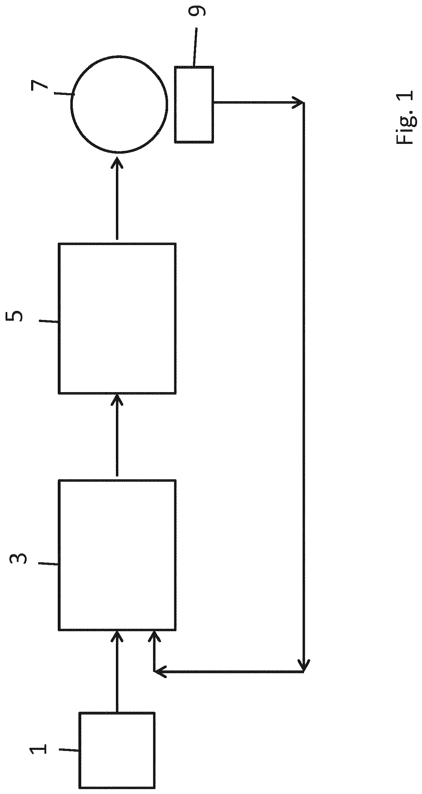

Die in Fig. 1 dargestellte Anforderungseinrichtung 1 ist ausgestaltet, eine Bremsanforderung zu erzeugen und auszugeben. Ein Ausgang der Anforderungseinrichtung 1 ist, wie durch einen Pfeil dargestellt, mit einem Eingang einer Bremswirkungsvorgabe-Erzeugungseinrichtung 3 verbunden, die ausgestaltet ist, die Bremsanforderung als Eingangsgröße zu empfangen. Ein Ausgang der Bremswirkungsvorgabe-Erzeugungseinrichtung 3 ist, wie durch einen weiteren Pfeil dargestellt, mit einem Eingang eines Bremssystems 5 verbunden, welches ausgestaltet ist, das Fahrzeug gemäß der als Eingangsgröße empfangenen Bremswirkungsvorgabe abzubremsen. Die Wirkung des Bremssystems 5 auf das Schienenfahrzeug ist durch einen ausgehend von dem Bremssystem 5 nach rechts weisenden Pfeil dargestellt, der auf ein symbolisch dargestelltes Rad 7 des Fahrzeugs zeigt. Durch eine Bremsung wird die Geschwindigkeit des Rades 7 und damit des Fahrzeugs verringert. Mit dem Rad 7 ist in dem Ausführungsbeispiel eine Messeinrichtung 9 kombiniert, die die Fahrbewegung des Fahrzeugs als Funktion der Zeit misst. Die Messeinrichtung 9 ist ausgestaltet, entsprechende Messwerte zu erzeugen und im Ausführungsbeispiel der Bremswirkungsvorgabe-Erzeugungseinrichtung 3 zuzuführen, welche daraus insbesondere Informationen über die tatsächliche, gemessene Verzögerung und/oder die tatsächliche, gemessene Geschwindigkeit des Fahrzeugs erhält.

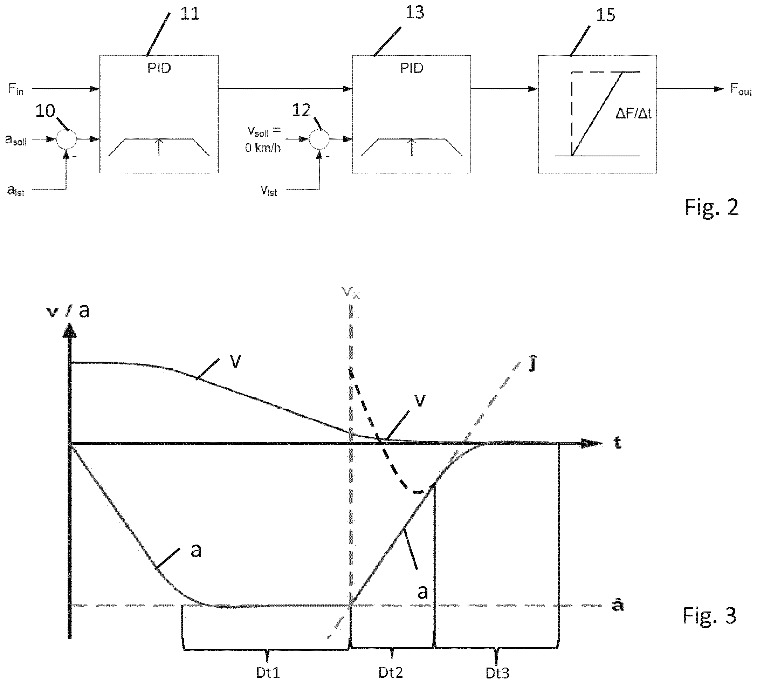

Ein konkretes, bevorzugtes Ausführungsbeispiel der Bremswirkungsvorgabe-Erzeugungseinrichtung, insbesondere der in Fig. 1 dargestellten Erzeugungseinrichtung 3, ist in Fig. 2 schematisch dargestellt. In dem gezeigten Ausführungsbeispiel ist die Bremsanforderung eine angeforderte Bremskraft $F_{in}$, die der Erzeugungseinrichtung zugeführt wird. Während der ersten Bremsphase wird die Bremsanforderung einer Einrichtung 11 zugeführt, die in dem konkreten Ausführungsbeispiel als erster Regler ausgestaltet ist. Als Beispiel ist die Bezeichnung PID angegeben, die andeutet, dass es sich bei dem ersten Regler 11 um einen Regler mit Proportional-, Integral- und Differenzialverhalten handeln kann. Entsprechendes gilt für einen zweiten Regler 13, auf den noch näher eingegangen wird. Die während der ersten Bremsphase aktive Einrichtung 11 hat noch einen weiteren Eingang, über den sie einen Vergleichswert von einer Vergleichseinrichtung 10 empfängt, die eine Soll-Beschleunigung $a_{soll}$ mit einer tatsächlichen, insbesondere gemessenen, Ist-Beschleunigung $a_{ist}$ vergleicht und deren Differenz als Vergleichswert an die Einrichtung 11 ausgibt. Insbesondere kann es sich bei der Soll-Beschleunigung $a_{soll}$ um die Ausgangsgröße einer in Fig. 2 nicht dargestellten Begrenzungseinrichtung handeln, die den Betrag der Fahrzeug-Beschleunigung auf den vorgegebenen Verzögerungsmaximalwert begrenzt. Diese Begrenzung findet insbesondere dann statt, wenn sich aus der angeforderten Bremskraft $F_{in}$ - oder in einer Ausgestaltungsvariante aus der angeforderten Verzögerung - ein Verzögerungswert ergibt, der größer als der vorgegebene Verzögerungsmaximalwert ist. Bei einer weiteren Ausgestaltungsvariante der Erzeugungseinrichtung kann die Einrichtung 11 während der ersten Bremsphase die gegebenenfalls auf den vorgegebenen Verzögerungsmaximalwert begrenzte Verzögerung in eine entsprechende Bremswirkungsvorgabe umwandeln, insbesondere unter Berücksichtigung der Fahrzeugmasse umrechnen.

In dem in Fig. 2 dargestellten Beispiel ist rechts die Ausgangsgröße Bremskraftvorgabe $F_{out}$ dargestellt. Während der ersten Bremsphase ist dies die Ausgangsgröße, die unmittelbar von der ersten Einrichtung 11 erzeugt und ausgegeben wird. Die weiteren in Fig. 2 dargestellten Einrichtungen 13 und 15 sind während der ersten Bremsphase insbesondere nicht aktiv. Die Bremskraftvorgabe $F_{out}$ muss nicht durch diese Einrichtungen 13, 15 hindurch ausgegeben werden. Die serielle Darstellung in Fig. 2, die die Einrichtungen 11, 13, 15 hintereinander geschaltet darstellt, ist lediglich schematisch zu verstehen. Es ist jedoch nicht ausgeschlossen, dass die Ausgangsgröße der Einrichtung 11 durch zumindest eine der Einrichtungen 13, 15 hindurch an das Bremssystem ausgegeben wird.

Insbesondere durch eine nicht in Fig. 2 dargestellte Vorausberechnungseinrichtung, die auch bei anderen als in Fig. 2 dargestellten Ausgestaltungen der Erzeugungseinrichtung vorhanden sein kann, wird der vo-

rausberechnete Geschwindigkeitswert $v_x$ berechnet, durch den der Übergang zwischen der ersten Bremsphase und der zweiten Bremsphase festgelegt wird. Bevorzugt wird dieser vorausberechnete Geschwindigkeitswert gemäß folgender Gleichung berechnet:

$$v_x = 1/2 * â * F_{out} / (\Delta F / \Delta t)$$

Dabei bedeuten die Bezeichnungen ä den vorgegebenen Verzögerungsmaximalwert, $F_{out}$ wie oben erwähnt die Bremskraftvorgabe (und zwar vorzugsweise den zuletzt während der ersten Bremsphase gültigen Wert davon) und $\Delta F / \Delta t$ den Betrag der Abnahme der Bremskraft pro Zeitintervall, der dem vorgegebenen Ruckmaximalwert bei vorgegebener oder tatsächlich vorhandener Fahrzeugmasse entspricht. Die Formel hat den Vorteil, dass sie die oben vor der Figurenbeschreibung genannten Einflussgrößen für die Vorausberechnung der Übergangsgeschwindigkeit miteinander kombiniert. Insbesondere wenn die Verzögerung in der ersten Bremsphase nicht den vorgegebenen Verzögerungsmaximalwert erreicht, kann statt des vorgegebenen Verzögerungsmaximalwertes ä die tatsächliche Verzögerung a (und zwar vorzugsweise der zuletzt während der ersten Bremsphase gültige Wert davon) in der ersten Bremsphase für die Formel verwendet werden.

Der in Fig. 2 dargestellte zweite Regler 13 ist der Stillstands-Regler, der vorzugsweise mit dem Übergang von der ersten in die zweite Bremsphase aktiviert wird. Der zweite Regler 13 erhält als Eingangsgröße die insbesondere gemessene tatsächliche Fahrgeschwindigkeit. Lediglich aus Gründen der Illustration ist eingangsseitig des zweiten Reglers 13 eine zweite Vergleichseinrichtung 12 dargestellt, die die tatsächliche Fahrgeschwindigkeit $v_{ist}$ mit ihrem Sollwert $v_{soll}$ vergleicht, und zwar die Differenz davon bildet. Allerdings ist der Sollwert der Fahrgeschwindigkeit null, weshalb auf die zweite Vergleichseinrichtung 12 verzichtet werden kann und die tatsächliche Fahrgeschwindigkeit $v_{ist}$ unmittelbar dem zweiten Regler zugeführt werden kann. Optional kann dem zweiten Regler 13 auch die Bremsanforderung, im Ausführungsbeispiel die Bremskraftanforderung $F_{in}$ zugeführt werden, um den Bremsvorgang gegebenenfalls abbrechen zu können, wenn keine Bremswirkung mehr angefordert wird.

Während der zweiten Bremsphase erzeugt der zweite Regler 13 bereits fortlaufend oder zyklisch eine Bremswirkungsvorgabe, die er über einen Ausgang an den Eingang der Begrenzungseinrichtung 15 ausgibt. Die Begrenzungseinrichtung 15 begrenzt die Bremswirkungsvorgabe so, dass der Fahrzeugruck nicht den vorgegebenen Ruckmaximalwert überschreitet. Solange, d.h. während der zweiten Bremsphase, der zweite Regler 13 Werte der Bremswirkungsvorgabe erzeugt und ausgibt, die zu einem Ruck oberhalb des vorgegebenen Ruckmaximalwerts führen würden, begrenzt die Begrenzungseinrichtung 15 den Ruck auf den vorgegebenen Ruckmaximalwert, d.h. die im Ausführungsbeispiel als Bremskraftvorgabe aus $F_{out}$ ausgegebene Bremswirkungsvorgabe nimmt konstant mit gleicher Steigung pro Zeitintervall ab. Dies ist innerhalb des Blocks in Fig. 2, der die Begrenzungseinrichtung 15 darstellt, durch eine Gerade mit der Bezeichnung $\Delta F / \Delta t$ angedeutet.

Wenn die von dem zweiten Regler 13 ausgegebene Bremswirkungsvorgabe nicht mehr zu einer ruckbegrenzten Reduzierung der Bremswirkungsvorgabe durch die Begrenzungseinrichtung 15 führt, beginnt die dritte Bremsphase, in der die Fahrgeschwindigkeit $v_{ist}$ von dem zweiten Regler 13 auf null geregelt wird.

Fig. 3 zeigt ein Beispiel insbesondere für den zeitlichen Verlauf der Fahrgeschwindigkeit v und die Fahrzeugbeschleunigung a während des Bremsvorganges als Funktion der Zeit t. Links in dem Diagramm ist eine Phase des Bremsvorganges dargestellt, die noch vor der ersten Bremsphase stattfindet. In dieser Phase nimmt die Fahrgeschwindigkeit v zunächst noch geringfügig pro Zeitintervall ab und erhöht sich die Verzögerung -a in dem Ausführungsbeispiel annähernd geradlinig, begrenzt durch den vorgegebenen Ruckmaximalwert, dessen Betrag auch als Maximalwert für die Zunahme der Verzögerung gilt.

In der darauffolgenden ersten Bremsphase Dt1 findet eine Begrenzung der Beschleunigung a bzw. der Verzögerung -a auf den Verzögerungsmaximalwert ä statt. Im Fall eines Reglers, der z.B. der erste in Fig. 2 dargestellte Regler 11 ist, kann die Verzögerung -a den vorgegebenen Verzögerungsmaximalwert ä geringfügig überschreiten, d.h. der in Fig. 3 dargestellte zeitliche Verlauf der Beschleunigung unterschreitet die gestrichelt dargestellte horizontale Linie, die die Lage des vorgegebenen Verzögerungsmaximalwertes ä darstellt.

Ab dem Zeitpunkt, an dem die Fahrgeschwindigkeit v den vorausberechneten Übergangsgeschwindigkeitswert $v_x$ erreicht, d.h. in der zweiten Bremsphase Dt2, wird die Beschleunigung a entsprechend dem vorgegebenen Ruckmaximalwert ĵ und damit geradlinig ansteigend erhöht. Durch eine gestrichelte Linie, die insbesondere den Verlauf einer Parabel hat, welche zum Zeitpunkt der vorausberechneten Übergangsgeschwindigkeit $v_x$ beginnt, ist der Verlauf der hypothetischen Fahrzeugbeschleunigung angedeutet, welche sich aus der Ausgangsgröße des Stillstands-Reglers während der zweiten Bremsphase Dt2 ergibt. Aufgrund der Ruckbegrenzung in der zweiten Bremsphase werden diese Werte der Ausgangsgröße des Stillstands-Reglers jedoch nicht an das Bremssystem ausgegeben.

Zum Zeitpunkt des Übergangs von der zweiten Bremsphase Dt2 in die dritte Bremsphase Dt3 jedoch wird die Ruckbegrenzung nicht mehr benötigt bzw. ist nicht mehr wirksam und bestimmen die Werte der Ausgangsgröße des Stillstands-Reglers den weiteren zeitlichen Verlauf der Beschleunigung a, die den gestrichelt dargestellten gerade ansteigenden Verlauf des vorgegebenen Ruckmaximalwertes ĵ verlässt. Der Verlauf der Beschleunigung a schwenkt auf die durch die Zeitachse dargestellte Nulllinie ein, wobei es zu einem geringfügen Überschreiten der Nulllinie kommen kann, bis am Ende der dritten Bremsphase Dt3 der Fahrzeugstillstand erreicht ist. Die Steigungswerte der Fahrzeugbeschleunigung a werden in der dritten Bremsphase Dt3 mit fortschreitender Zeit kleiner, d.h. der Ruck nimmt ab. Dies bedeutet, dass es zu einem für die Personen in dem Fahrzeug sehr komfortablen Abbremsen bis zum Stillstand kommt.

Der oberhalb der Zeitachse dargestellte zeitliche Verlauf der Fahrgeschwindigkeit v entspricht dem Verlauf der Fahrzeugbeschleunigung a. In der ersten Bremsphase Dt1 nimmt die Fahrgeschwindigkeit v etwa linear ab, beschreibt wegen des linearen Anstieges der Beschleunigung a in der zweiten Bremsphase Dt2 einen parabolischen Verlauf und nähert sich in der dritten Bremsphase Dt3 bei sehr kleinen Werten der Fahrgeschwindigkeit v der Nulllinie.

Zum Zeitpunkt des Fahrzeug-Stillstandes kann ein mechanisches Bremssystem aktiviert werden, um zu verhindern, dass ein elektrodynamisches Bremssystem mit Generator und entgegen der bisherigen Fahrtrichtung gerichteter Bremswirkung in umgekehrte Richtung zu einem Wiederanfahren in entgegengesetzter Richtung führt. Anschließend kann das elektrodynamische Bremssystem abgeschaltet werden, bis es in einer späteren Betriebsphase wieder benötigt wird. Dadurch nutzt sich das mechanische Bremssystem auch nicht wesentlich durch Reibung ab.

**Patentansprüche**

1. Verfahren zum Bremsen eines Schienenfahrzeugs, wobei das Schienenfahrzeug ein mit einer Bremswirkungsvorgabe ($F_{out}$) als Eingangsgröße steuerbares Bremssystem (5) aufweist und wobei die Bremswirkungsvorgabe ($F_{out}$) in der folgenden Weise als im Laufe der Zeit (t) veränderliche Größe erzeugt und an das Bremssystem (5) ausgegeben wird, bis das Schienenfahrzeug zum Stillstand gebracht ist:

   - in einer ersten Bremsphase (Dt1) wird die Bremswirkungsvorgabe ($F_{out}$) abhängig von einer Bremsanforderung ($F_{in}$) erzeugt und ausgegeben, wobei eine Verzögerung (-a) des Schienenfahrzeugs auf einen vorgegebenen Verzögerungsmaximalwert (ä) begrenzt wird, **dadurch gekennzeichnet, dass**
   - in einer späteren Bremsphase, die nach der ersten Bremsphase (Dt1) ausgeführt wird, wird die Bremswirkungsvorgabe ($F_{out}$) durch einen Stillstands-Regler (13) als Regler-Ausgangsgröße erzeugt, dem als Regler-Eingangsgröße eine Fahrgeschwindigkeit (v) des Schienenfahrzeugs zugeführt wird und der die Fahrgeschwindigkeit (v) auf den Sollwert null regelt.

2. Verfahren nach dem vorhergehenden Anspruch, wobei in einer auf die erste Bremsphase (Dt1) folgenden zweiten Bremsphase (Dt2) der Betrag der Bremswirkungsvorgabe ($F_{out}$) automatisch stetig reduziert und ausgegeben wird, wobei die Reduktion des Betrages der Bremswirkungsvorgabe ($F_{out}$) pro Zeitintervall einem vorgegebenen Ruckmaximalwert (j) entspricht, und wobei die spätere Bremsphase eine dritte Bremsphase (Dt3) ist, die der zweiten Bremsphase (Dt2) folgt.

3. Verfahren nach Anspruch 2, wobei die zweite Bremsphase (Dt2) zu dem Zeitpunkt beginnt, an dem die Fahrgeschwindigkeit einen vorausberechneten Geschwindigkeitswert ($v_x$) hat.

4. Verfahren nach Anspruch 3, wobei der vorausberechnete Geschwindigkeitswert ($v_x$) abhängig von einer von folgend genannten Größen oder abhängig von einer Kombination zweier oder dreier der folgend genannten Größen vorausberechnet wird: die erzeugte Bremswirkungsvorgabe ($F_{out}$) während der ersten Bremsphase (Dt1), der vorgegebene Verzögerungsmaximalwert (ä) und der vorgegebene Ruckmaximalwert ($\hat{j}$).

5. Verfahren nach einem der Ansprüche 2-4, wobei der Stillstands-Regler (13) mit einem Übergang von der ersten Bremsphase (Dt1) in die zweite Bremsphase (Dt2) aktiviert wird und bereits in der zweiten Bremsphase (Dt2) eine Bremswirkung als Regler-Ausgangsgröße erzeugt, wobei jedoch in der zweiten Bremsphase (Dt2) eine Bremswirkungsvorgabe ($F_{out}$) ausgegeben wird, die der Reduktion des Betrages der Bremswirkungsvorgabe ($F_{out}$) pro Zeitintervall entsprechend dem vorgegebenen Ruckmaximalwert (j) entspricht.

6. Verfahren nach Anspruch 5, wobei der Stillstands-Regler (13) eine Integralregelung aufweist, die bei der Erzeugung der Regler-Ausgangsgröße ein Integral der Fahrgeschwindigkeit (v) über die seit dem Beginn der zweiten Bremsphase (Dt2) verstrichene Zeit (t) berücksichtigt.

7. Verfahren nach Anspruch 6, wobei der Integralregelung ein negativer Startwert der Bremswirkung zugewiesen wird, der mit fortschreitender Zeit (t) zunehmend von einem Ergebniswert des Integrals kompensiert wird.

8. Verfahren nach Anspruch 7, wobei der negative Startwert durch eine Vorzeichenumkehr der Bremswirkungsvorgabe ($F_{out}$) gebildet wird, die zum Beginn der zweiten Bremsphase (Dt2) ausgegeben wird.

9. Anordnung zum Bremsen eines Schienenfahrzeugs, wobei die Anordnung einen Ausgang zur Ausgabe einer Bremswirkungsvorgabe (Fout) als Eingangsgröße für ein steuerbares Bremssystem (5) des Schienenfahrzeugs aufweist, wobei die Anordnung eine Erzeugungseinrichtung (3) zur Erzeugung der Bremswirkungsvorgabe ($F_{out}$) als im Laufe der Zeit (t) veränderliche Größe aufweist, um das Schienenfahrzeug zum Stillstand zu bringen, und wobei die Erzeugungseinrichtung (3) wie folgt ausgestaltet ist:

- in einer ersten Bremsphase (Dt1) wird die Bremswirkungsvorgabe ($F_{out}$) abhängig von einer Bremsanforderung ($F_{in}$) erzeugt und ausgegeben, wobei eine Verzögerung (-a) des Schienenfahrzeugs auf einen vorgegebenen Verzögerungsmaximalwert (ä) begrenzt wird, **dadurch gekennzeichnet, dass**
- in einer späteren Bremsphase, die nach der ersten Bremsphase (Dt1) ausgeführt wird, wird die Bremswirkungsvorgabe ($F_{out}$) durch einen Stillstands-Regler (13) der Erzeugungseinrichtung (3) als Regler-Ausgangsgröße erzeugt, wobei dem Stillstands-Regler (13) als Regler-Eingangsgröße eine Fahrgeschwindigkeit (v) des Schienenfahrzeugs zugeführt wird und der Stillstands-Regler (13) die Fahrgeschwindigkeit (v) auf den Sollwert null regelt.

**10.** Anordnung nach Anspruch 9, wobei die Erzeugungseinrichtung (3) ausgestaltet ist, in einer auf die erste Bremsphase (Dt1) folgenden zweiten Bremsphase (Dt2) den Betrag der Bremswirkungsvorgabe ($F_{out}$) automatisch stetig zu reduzieren und auszugeben, wobei die Reduktion des Betrages der Bremswirkungsvorgabe ($F_{out}$) pro Zeitintervall einem vorgegebenen Ruckmaximalwert (j) entspricht, und wobei die spätere Bremsphase eine dritte Bremsphase (Dt3) ist, die der zweiten Bremsphase (Dt2) folgt.

**11.** Schienenfahrzeug aufweisend ein Bremssystem (5), das mit einer Bremswirkungsvorgabe (Fout) als Eingangsgröße steuerbar ist, und eine Anordnung nach Anspruch 9 oder 10.

**Claims**

**1.** A method for decelerating a rail vehicle, the rail vehicle comprising a brake arrangement (5) controllable by way of a braking action specification ($F_{out}$), serving as an input variable, and the braking action specification ($F_{out}$) being generated in the following manner as a variable changing over the course of time (t) and being output to the brake arrangement (5) until the rail vehicle has been brought to a standstill:

- during a first braking phase (Dt1), the braking action specification ($F_{out}$) is generated as a function of a braking request ($F_{in}$) and output, a deceleration (a) of the rail vehicle being limited to a predefined maximum deceleration value ($\hat{a}$), **characterized in that**, during a later braking phase carried out after the first braking phase (Dt1), the braking action specification ($F_{out}$) is generated as a controller output variable by a standstill controller (13) to which a travel speed (v) of the rail vehicle is fed as a controller input variable and which regulates the travel speed (v) to the setpoint value of zero.

**2.** The method according to the preceding claim, wherein, during a second braking phase (Dt2) following the first braking phase (Dt1), the absolute amount of the braking action specification ($F_{out}$) is automatically steadily reduced and output, the reduction of the absolute amount of the braking action specification ($F_{out}$) per time interval corresponding to a predefined maximum jerk value (j), and the later braking phase being a third braking phase (Dt3), which follows the second braking phase (Dt2).

**3.** The method according to claim 2, wherein the second braking phase (Dt2) begins at the point in time at which the travel speed has a precalculated speed value ($v_x$).

**4.** The method according to claim 3, wherein the precalculated speed value ($v_x$) is precalculated as a function of one of the variables mentioned hereafter, or as a function of a combination of two or three of the variables mentioned hereafter: the generated braking action specification ($F_{out}$) during the first braking phase (Dt1), the predefined maximum deceleration value ($\hat{a}$), and the predefined maximum jerk value (j).

**5.** A method according to any one of claims 2 to 4, wherein the standstill controller (13) is activated with a transition from the first braking phase (Dt1) to the second braking phase (Dt2), and already generates a braking action, serving as a controller output variable, during the second braking phase (Dt2), however during the second braking phase (Dt2) a braking action specification ($F_{out}$) being output which corresponds to the reduction of the absolute amount of the braking action specification ($F_{out}$) per time interval corresponding to the predefined maximum jerk value (j).

**6.** The method according to claim 5, wherein the standstill controller (13) comprises an integrating controlling, which takes an integral of the travel speed (v) over the time (t) that has passed since the beginning of the second braking phase (Dt2) into consideration during the generation of the controller output variable.

7. The method according to claim 6, wherein the integrating controlling is assigned a negative starting value of the braking action, which as the time (t) passes is increasingly compensated for by a result value of the integral.

8. The method according to claim 7, wherein the negative starting value is formed by a reversal in the sign of the braking action specification ($F_{out}$) output at the beginning of the second braking phase (Dt2).

9. A arrangement for decelerating a rail vehicle, the arrangement comprising an output for outputting a braking action specification ($F_{out}$), serving as an input variable for a controllable brake arrangement (5) of the rail vehicle, the arrangement comprising a generation unit (3) for generating the braking action specification ($F_{out}$) as a variable changing over the course of time (t) to bring the rail vehicle to a standstill, and the generation unit (3) being designed as follows:

- during a first braking phase (Dt1), the braking action specification ($F_{out}$) is generated as a function of a braking request ($F_{in}$) and output, a deceleration (a) of the rail vehicle being limited to a predefined maximum deceleration value ($\hat{a}$), **characterized in that**, during a later braking phase carried out after the first braking phase (Dt1), the braking action specification ($F_{out}$) is generated as a controller output variable by a standstill controller (13) of the generating unit (3), a travel speed (v) of the rail vehicle being fed as a controller input variable to the standstill controller (13), and the standstill controller (13) regulating the travel speed (v) to the setpoint value of zero.

10. The arrangement according to claim 9, wherein the generating unit (3) is configured, during a second braking phase (Dt2) following the first braking phase (Dt1), to automatically steadily reduce the absolute amount of the braking action specification ($F_{out}$) and to output it, the reduction of the absolute amount of the braking action specification ($F_{out}$) per time interval corresponding to a predefined maximum jerk value (j), and the later braking phase being a third braking phase (Dt3), which follows the second braking phase (Dt2).

11. A rail vehicle, comprising a brake arrangement (5) that can be controlled by way of a braking action specification ($F_{out}$), serving as an input variable, and a arrangement according to claim 9 or 10.

**Revendications**

1. Procédé permettant de freiner un véhicule ferroviaire, le véhicule ferroviaire présentant un système de freinage (5) pouvant être commandé par une spécification d'effet de freinage ($F_{out}$) comme grandeur d'entrée, et la spécification d'effet de freinage ($F_{out}$) étant générée de la manière suivante sous la forme d'une grandeur variable dans le temps (t) et étant sortie au système de freinage (5) jusqu'à ce que le véhicule ferroviaire soit immobilisé :

- dans une première phase de freinage (Dtl), la spécification d'effet de freinage ($F_{out}$) est générée en fonction d'une demande de freinage ($F_{in}$) et est sortie, une décélération (-a) du véhicule ferroviaire étant limitée à une valeur maximale de décélération spécifiée ($\hat{a}$),
**caractérisé en ce que**
- dans une phase de freinage ultérieure qui est exécutée après la première phase de freinage (Dtl), la spécification d'effet de freinage ($F_{out}$) est générée par un régulateur d'immobilisation (13) sous la forme d'une grandeur de sortie de régulateur, auquel une vitesse de déplacement (v) du véhicule ferroviaire est amenée comme grandeur d'entrée de régulateur et qui régule la vitesse de déplacement (v) sur la valeur de consigne zéro.

2. Procédé selon la revendication précédente, dans lequel, dans une deuxième phase de freinage (Dt2) suivant la première phase de freinage (Dtl), la quantité de la spécification d'effet de freinage ($F_{out}$) est réduite automatiquement en continu et est sortie, la réduction de la quantité de la spécification d'effet de freinage ($F_{out}$) par intervalle de temps correspondant à une valeur maximale de pente d'accélération prédéfinie (j), et la phase de freinage ultérieure étant une troisième phase de freinage (Dt3) qui suit la deuxième phase de freinage (Dt2).

3. Procédé selon la revendication 2, dans lequel la deuxième phase de freinage (Dt2) commence au moment où la vitesse de déplacement présente une valeur de vitesse ($v_x$) calculée au préalable.

4. Procédé selon la revendication 3, dans lequel la valeur de vitesse ($v_x$) calculée au préalable est calculée au préalable en fonction d'une des grandeurs mentionnées ci-après ou en fonction d'une combinaison de deux ou de trois des grandeurs mentionnées ci-après : la spécification d'effet de freinage ($F_{out}$) générée pendant la première phase de freinage (Dtl), la valeur maximale de décélération prédéfinie ($\hat{a}$) et la valeur maximale de pente d'accélération prédéfinie ($\hat{j}$).

**5.** Procédé selon l'une quelconque des revendications 2 à 4, dans lequel le régulateur d'immobilisation (13) est activé par un passage de la première phase de freinage (Dt1) à la deuxième phase de freinage (Dt2), et génère dès la deuxième phase de freinage (Dt2) un effet de freinage sous la forme d'une grandeur de sortie de régulateur, mais dans lequel, dans la deuxième phase de freinage (Dt2), une spécification d'effet de freinage ($F_{out}$) est sortie qui correspond à la réduction de la quantité de la spécification d'effet de freinage ($F_{out}$) par intervalle de temps selon la valeur maximale de pente d'accélération prédéfinie ($\hat{j}$).

**6.** Procédé selon la revendication 5, dans lequel le régulateur d'immobilisation (13) présente une régulation par intégration qui tient compte lors de la génération de la grandeur de sortie de régulateur d'une intégrale de la vitesse de déplacement (v) pendant le temps (t) écoulé depuis le début de la deuxième phase de freinage (Dt2).

**7.** Procédé selon la revendication 6, dans lequel la régulation par intégration est associée à une valeur initiale négative de l'effet de freinage qui est avec le temps (t) compensée de plus en plus par une valeur de résultat de l'intégrale.

**8.** Procédé selon la revendication 7, dans lequel la valeur initiale négative est formée par une inversion de signe de la spécification d'effet de freinage ($F_{out}$) qui est sortie au début de la deuxième phase de freinage (Dt2).

**9.** Agencement permettant de freiner un véhicule ferroviaire, l'agencement présentant une sortie pour sortir une spécification d'effet de freinage ($F_{out}$) comme grandeur d'entrée pour un système de freinage (5) pouvant être commandé du véhicule ferroviaire, l'agencement présentant un dispositif de génération (3) pour générer la spécification d'effet de freinage ($F_{out}$) sous la forme d'une grandeur variable dans le temps (t) afin d'immobiliser le véhicule ferroviaire, et le dispositif de génération (3) étant configuré comme suit :

    - dans une première phase de freinage (Dtl), la spécification d'effet de freinage ($F_{out}$) est générée en fonction d'une demande de freinage ($F_{in}$) et est sortie, une décélération (-a) du véhicule ferroviaire étant limitée à une valeur maximale de décélération spécifiée (â),
    **caractérisé en ce que**
    - dans une phase de freinage ultérieure qui est exécutée après la première phase de freinage (Dtl), la spécification d'effet de freinage ($F_{out}$) est générée par un régulateur d'immobilisation (13) du dispositif de génération (3) sous la forme d'une grandeur de sortie de régulateur une vitesse de déplacement (v) du véhicule ferroviaire étant amenée au régulateur d'immobilisation (13) comme grandeur d'entrée de régulateur et le régulateur d'immobilisation (13) régulant la vitesse de déplacement (v) sur la valeur de consigne zéro.

**10.** Agencement selon la revendication 9, dans lequel le dispositif de génération (3) est configuré, dans une deuxième phase de freinage (Dt2) suivant la première phase de freinage (Dtl), pour réduire automatiquement en continu la quantité de la spécification d'effet de freinage ($F_{out}$) et pour la sortir, la réduction de la quantité de la spécification d'effet de freinage ($F_{out}$) par intervalle de temps correspondant à une valeur maximale de pente d'accélération prédéfinie (j), et la phase de freinage ultérieure étant une troisième phase de freinage (Dt3) qui suit la deuxième phase de freinage (Dt2).

**11.** Véhicule ferroviaire, présentant un système de freinage (5) qui peut être commandé par une spécification d'effet de freinage ($F_{out}$) comme grandeur d'entrée, et un agencement selon la revendication 9 ou 10.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03086809 A1
- DE 3607239 A1
- EP 0038956 A2